# EUROPÄISCHE PATENTSCHRIFT

(11) **EP 1 427 951 B1**
(45) Veröffentlichungstag und Bekanntmachung des Hinweises auf die Patenterteilung: **10.09.2008**
(21) Anmeldenummer: 02772285.9
(22) Anmeldetag: 10.09.2002
(51) Int. Cl.: F16F 7/104, F16F 3/04, F16F 15/04, F25D 23/00

(54) **KÄLTEGERÄT**
DEVICE FOR REFRIGERATION
APPAREIL FRIGORIFIQUE

(30) Priorität: 13.09.2001 DE 10145145
(43) Veröffentlichungstag der Anmeldung: 16.06.2004
(73) Patentinhaber: BSH Bosch und Siemens Hausgeräte GmbH, 81739 München (DE)
(72) Erfinder: ATHANASIOU, Athanasios, 89537 Giengen (DE)
(86) Internationale Anmeldenummer: PCT/EP2002/010144
(87) Internationale Veröffentlichungsnummer: WO 2003/023251

(56) Entgegenhaltungen:
- WO-A-00/38967
- DE-A- 3 630 549
- FR-A- 2 456 631
- US-A- 5 913 892
- PATENT ABSTRACTS OF JAPAN vol. 012, no. 332 (M-738), 8. September 1988 (1988-09-08) & JP 63 096337 A (MITSUBISHI HEAVY IND LTD), 27. April 1988 (1988-04-27)
- JULIEN M-A: "EXAMEN SYNOPTIQUE, SUR LEURS MODELS COMMUNS, DES PROBLEMES DE SUSPENSION A DEUX ETAGES ET D'AMORTISSEMENT DUYNAMIQUE DES VIBRATIONS" EXTRAIT DU JOURNAL SIA, XX, XX, 1. Oktober 1958 (1958-10-01), Seiten 1-15, XP002035038
- PATENT ABSTRACTS OF JAPAN vol. 008, no. 094 (M-293), 28. April 1984 (1984-04-28) & JP 59 009335 A (TOKYO SHIBAURA DENKI KK), 18. Januar 1984 (1984-01-18)
- PATENT ABSTRACTS OF JAPAN vol. 007, no. 254 (M-255), 11. November 1983 (1983-11-11) & JP 58 137633 A (MATSUSHITA DENKI SANGYO KK), 16. August 1983 (1983-08-16)

## Beschreibung

Die vorliegende Erfindung betrifft ein Kältegerät mit einem Schwingungen erzeugenden Verdichter und einem Gehäuse zur Aufnahme des Verdichters.

Das Gehäuse ist selbst schwingfähig und kann von den Schwingungen des Verdichters angeregt werden und die unerwünschte Geräuschentwicklung durch den Verdichter fördern.

Ein Kältegerät, bei dem ein Verdichter über schwingungsdämpfende Federn am Gehäuse befestigt ist, ist aus US 5 913 892 bekannt.

Eine schwingungsfeste Aufhängung für einen Motor, bei der Motor über Federn mit Basisteilen verbunden ist und die Basisteile miteinander und mit einem Fundament jeweils durch weitere Federn verbunden sind, ist in JP 63 096 337 A beschrieben.

Eine theoretische Untersuchung der dynamischen Schwingungsdämpfung in zweistufigen Aufhängungen findet sich bei Julien, M.-A.: Examen synoptique, sur leurs modèles communs, des problèmes de suspension à deux étages et d'amortissement dynamique de vibrations", Extrait du Journal SIA, XX, XX 1. Oktober 1958, Seiten 1-15, XP002035038.

Ziel der vorliegenden Erfindung ist, ein Kältegerät mit einem Verdichter und einem Gehäuse dafür anzugeben, bei dem die Schallemission durch das Gehäuse durch ein neues Wirkprinzip minimiert ist.

Diese Aufgabe wird gelöst durch ein Kältegerät nach Anspruch 1.

Eine Dissipation von Schwingungsenergie, die von dem Verdichter in das Kältegerät eingekoppelt wird, tritt auch bei herkömmlichen Kältegeräten auf, bei denen z.B. als Federanordnungen zwischen dem Verdichter und dem Gehäuse Gummipuffer vorgegehen sind. Diese setzen zwar einen geringen Anteil der eingekoppelten Schwingungsenergie in Reibungswärme um und dissipieren ihn so, erreichen aber bei weitem nicht die Dissipationsleistung, die nach der vorliegenden Erfindung dadurch erreichbar ist, dass die Federanordnung einen internen Schwingungsfreiheitsgrad hat. Dieser ermöglicht im Innern der Federanordnung Schwingungsbewegungen mit einer Amplitude, die im Vergleich zur Amplitude der Ankoppelpunkte an den Verdichter oder das Gehäuse an den Enden der Federanordnung relativ hohe Werte annehmen kann. Es ist nachvollziehbar, dass starke interne Bewegungen der Feder wesentlich mehr Schwingungsenergie in Wärme dissipieren, als dies bei den herkömmlichen Federanordnungen der Fall ist, denen ein solcher interner Freiheitsgrad fehlt. Diese dissipierte Energie kann vom Verdichter oder dem Gehäuse nicht mehr als Geräusch abgestrahlt werden.

Vorzugsweise wird der Freiheitsgrad dadurch geschaffen, dass die Federanordnung aus einer Mehrzahl von Einzelfederelementen aufgebaut ist, die zwischen dem Verdichter und dem Gehäuse in Reihe verbunden sind. Übergangspunkte zwischen den einzelnen Federelementen sind so mit einem eigenen Freiheitsgrad schwingfähig.

Um diesen Freiheitsgrad wirksam anregen zu können, ist es zweckmäßig, wenn die Einzelfederelemente unterschiedliche Federkonstanten haben.

Um eine hohe Dissipationsleistung zu erzielen, darf die Schwingungsamplitude des internen Freiheitsgrades nicht zu gering sein, denn wenn sie Null wäre, wäre auch die Dissipation Null. Damit die Amplitude des internen Freiheitsgrades nicht zu gering wird, muss sie Schwingungsenergie in geeigneter Menge speichern können; hierfür ist es zweckmäßig, dass zwischen den Einzelfederelementen jeweils eine schwingfähige Masse aufgehängt ist.

Die Schwingung des internen Freiheitsgrades ist beschreibbar durch einen Ausdruck der Form x=e^{-αt}, wobei x die Auslenkung, t die Zeit und α eine komplexe Konstante bezeichnet, die in an sich bekannter Weise durch Federkonstante und Dämpfung des internen Freiheitsgrades bestimmt ist. Vorzugsweise sollte die Dämpfung nur so stark sein, dass |Re α|<10|Im α|. Um andererseits eine Dämpfungsverbreiterung der internen Resonanz zu erreichen, die diese auch durch nicht genau auf ihre Resonanzfrequenz abgestimmte eingekoppelte Schwingungen anregbar macht, sollte die Dämpfung wenigstens so stark sein, dass | Re α <0.1*| Im α gilt.

Im allgemeinen ist ein Verdichter in einem Gehäuse an mehreren Aufhängungspunkten befestigt, wobei zweckmäßigerweise an allen diesen Aufhängungspunkten Federanordnungen mit internem Freiheitsgrad zwischen dem Verdichter und dem Gehäuse vorgesehen werden.

Schwingfähige Massen dieser mehreren Federanordnungen können untereinander verbunden sein, um eine möglichst hohe Symmetrie des gesamten schwingfähigen Systems aufrechtzuerhalten und ein chaotisches Schwingverhalten zu vermeiden, bei dem die Intensität der verschiedenen Spektralanteile des abgegebenen Geräuschs zeitlich variiert.

Weitere Merkmale und Vorteile der Erfindung ergeben sich aus der nachfolgenden Beschreibung von Ausführungsbeispielen mit Bezug auf die beigefügten Figuren. Es zeigen:
- Fig.1: schematisch eine Federanordnung gemäß dem Grundprinzip der Erfindung;
- Fig. 2: schematisch das Dämpfungsverhalten einer Federanordnung gemäß der Erfindung im Vergleich zur Dämpfung durch eine Einzelfeder,
- Fig. 3: einen schematischen Schnitt durch ein Kältegerät als Beispiel für eine erfindungsgemäße Anordnung von Aggregat und Gehäuse;
- Fig. 4: eine perspektivische Ansicht einer Federanordnung des Kältegeräts aus Fig. 2; und
- Fig. 5a-5c: Draufsichten auf den Verdichter des Kältegeräts in verschiedenen Ausführungsvarianten.

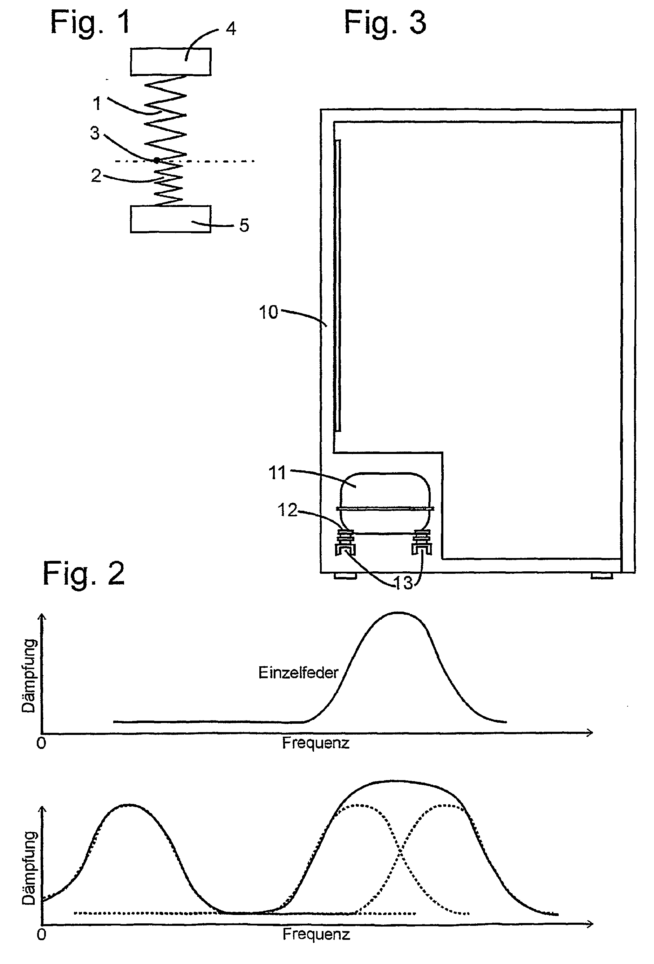

Fig. 1 zeigt eine idealisierte Darstellung einer Federanordnung für eine Anordnung aus schwingungserzeugendem Verdichter und Gehäuse. Die Federanordnung ist aufgebaut aus zwei Einzelfederelementen 1, 2, die hier als Spiralfedern dargestellt sind, im Prinzip aber Federn in beliebiger Ausgestaltung, insbesondere massive Körper aus einem stark dissipierenden, gummielastischem Material sein können. Die Federn sind untereinander an einem Punkt 3 verbunden, und sie sind an ihren von Punkt 3 abgewandten Enden jeweils mit einem Körper 4 bzw. 5 verbunden, von denen der eine das schwingungserzeugende Aggregat und der andere das Gehäuse darstellt. Für die Zwecke der vorliegenden Beschreibung soll angenommen werden, dass 4 der Verdichter und 5 das Gehäuse ist.

Die Einzelfederelemente 1, 2 haben unterschiedliche Federkonstanten k1, k2, die sich zu einer Gesamtfederkonstanten K=1/(1/k1+1/k2) überlagern, die das Schwingverhalten von Verdichter und Gehäuse relativ zueinander bestimmt.

Jedes der Einzelfederelemente 1, 2 ist in sich mit einer Eigenfrequenz schwingfähig, die durch ihre Federkonstante und ihre Masse bestimmt ist. Wenn eine Schwingung des Verdichters 4 in die Federanordnung eingekoppelt wird, so führt dies zu einer Anregung der Eigenschwingungen der Federn 1,2. Da diese gekoppelt sind, ist die Federanordnung nicht nur mit der durch die Gesamtfederkonstante K bestimmten Frequenz schwingfähig, sondern darüber hinaus mit den Eigenfrequenzen der Federn 1 und 2 sowie deren Summen- und Differenzfrequenz.

Die Eigenfrequenzen der Federn 1, 2 liegen zweckmäßigerweise im oberen hörbaren Spektralbereich, aber da die Resonanzen durch Dämpfung stark verbreitet sind, können sie auch darüber liegen. Eine einzeine Feder kann daher wirksam in ihrem Resonanzspektralbereich dämpfen; unterhalb dieses Bereichs ist sie nur wenig wirksam, wie im oberen Teil von Fig. 2 idealisiert dargestellt. Die Federanordnung gemäß der vorliegenden Erfindung hingegen dämpft in einem wesentlich breiteren Spektralbereich, der sich zusammensetzt aus den Resonanzspektralbereichen der zwei Einzelfedern und zusätzlich dem Differenzfrequenz-Spektralbereich, wie im unteren Teil von Fig. 2 gezeigt, wo gestrichelte Linien jeweils den Beitrag der Einzelfedern und der Differenzfrequenz zur Dämpfung und eine durchgezogene Linie die Gesamtdämpfung der Anordnung darstellt.

Derjenige Anteil der Bewegung des Aggregats 4, der eine der mehreren Schwingungen der Federanordnung resonant anregt, wird durch Dissipation innerhalb der Federanordnung verbraucht, erreicht daher nicht mehr das Gehäuse 5 und kann an diesem keine geräuschvollen Schwingungen mehr anregen.

Fig. 3 zeigt eine zweite Ausgestaltung der Erfindung. Eine wesentliche Quelle für Geräusche bei Haushalts-Kältegeräten sind deren Verdichter bzw. die darin verwendeten elektrischen Antriebsmotoren. Diese können die Kapsel, die den Verdichter umgibt, zu Schwingungen mit einer Vielzahl verschiedener Frequenzen anregen, deren Übertragung auf das Gehäuse des Kältegeräts es zu begrenzen gilt.

Die Kapsel des in einer unteren Ecke des Gehäuses 10 angeordneten Verdichters 11 trägt in herkömmlicher Weise eine Anzahl von Laschen 12, die zur Befestigung an Tragschienen 13 des Gehäuses dienen.

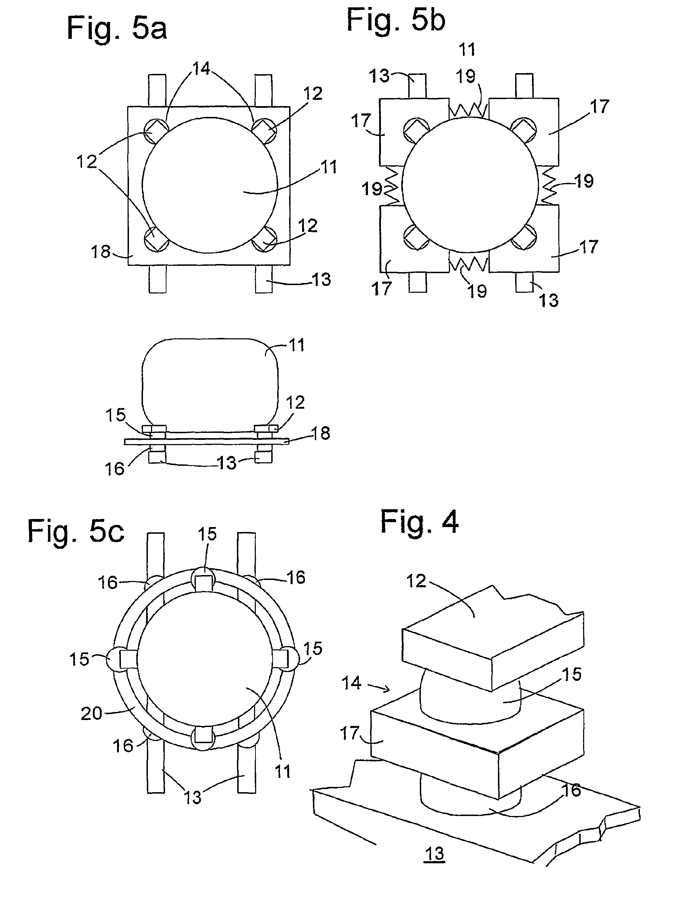

Fig. 4 zeigt eine perspektivische Ansicht einer solchen Lasche 12 und der zwischen ihr und einer zwischen ihr und der Tragschiene 13 platzierten Federanordnung 14. Die Federanordnung 14 ist zusammengesetzt aus zwei Einzelfederelementen 15, 16 in Art von Gummipuffern, zwischen denen ein Trägheitskörper 17 angeordnet ist. Der Trägheitskörper 17 fungiert als ein Energiespeicher für die verschiedenen Schwingungsfreiheitsgrade der Federanordnung und verbessert die Wirksamkeit, mit der die Eigenschwingungen der Federanordnung durch eine von außen eingekoppelte Schwingung angeregt werden.

Diese Masse kann zweckmäßigerweise so gewählt werden, dass die Schwingfrequenz des Trägheitskörpers 17 im Bereich der Schwingungen liegt, zu denen die Verdichterkapsel von dem Motor angeregt wird und die es zu dämpfen gilt. Die Resonanzfrequenz des aus den Federelementen 15, 16 und dem Trägheitskörper 17 gebildeten Resonators ist ν=(1/2π)√(K/m), wobei m eine äquivalente Masse ist, die sich aus der Masse des Trägheitskörpers 17 und Beiträgen der Federelemente 15, 16 zusammensetzt. Da die Federelemente 15, 16 aus einem stark dämpfenden Material bestehen, ist die Güte dieses Resonators extrem gering, so dass der Trägheitskörper 17 in einem sehr breiten Frequenzband um seine Resonanzfrequenz ν herum zu Schwingungen anregbar ist. Bei dieser Ausgestaltung ist es nicht erforderlich, dass die Eigenfrequenzen der Federelemente 15, 16 unterschiedlich sind, um die Schwingung des Trägheitskörpers 17 anregen zu können.

Zu beachten ist auch, dass die Federanordnung der Fig. 4 nicht etwa nur in einer einzigen Richtung, etwa longitudinal entlang ihrer Achse, schwingfähig ist; sondern auch quer zu dieser, wobei für die verschiedenen Bewegungsrichtungen jeweils unterschiedliche Federkonstanten gelten können.

All dies führt dazu, dass eine aufwendige rechnerische Optimierung nicht notwendig ist, um mit der gezeigten Federanordnung eine wirksame Schwingungsdämpfung zu erreichen. Sobald die Eigenfrequenz - oder bei Berücksichtigung der unterschiedlichen möglichen Bewegungsrichtungen: eine der Eigenfrequenzen - des Trägheitskörpers 17 ungefähr in der gleichen Größenordnung wie die zu dämpfenden Schwingungen des Verdichters 11 liegen, dämpft die Federanordnung 14 wirksam die Übertragung dieser Schwingungen auf das Gehäuse 10.

Diverse Abwandlungen der Federanordnung 14 sind möglich. So muss der Trägheitskörper 17 nicht etwa, wie oben angenommen, ein starrer Körper sein, er kann auch seinerseits wiederum ein Federelement darstellen, so dass die Federanordnung 14 letztlich aus drei in Reihe verbundenen Federelementen besteht.

Eine andere Möglichkeit ist, eine Reihenanordnung mit mehr als einem Trägheitskörper 17, z.B. eine Reihenanordnung aus drei jeweils durch einen Trägheitskörper getrennten Federelementen, vorzusehen, um mit dieser die vom Verdichter 11 aus eingespeisten Schwingungen in zwei aufeinanderfolgenden Schritten zu dämpfen. Dabei mag man für die zwei Trägheitskörper jeweils unterschiedliche Massen und/oder für die sie umgebenden Federn unterschiedliche Federkonstanten vorsehen, um unterschiedliche Eigenfrequenzen der Trägheitskörper für eine wirksame Dämpfung in verschiedenen Frequenzbereichen zu erzielen.

Eine weitere Abwandlung ist in Fig. 5a in Draufsicht und in Seitenansicht gezeigt.

Herkömmlicherweise und wie die Draufsicht der Fig. 5a zeigt, ist das Gehäuse des Verdichters 11 mit vier Laschen 12 versehen. An jeder von diesen ist eine Federanordnung 14 für die Verbindung mit den Tragschienen 13 des Gehäuses angeordnet. Die Trägheitskörper 17 der Federanordnungen 14 sind hier, wie die Seitenansicht zeigt, zu einer einzigen Platte 18 verschmolzen, die jeweils an vier Punkten zwischen Federelementen 15, 16 der vier Federanordnungen 14 eingespannt ist.

Durch diese Verschmelzung ergibt sich eine stabilere Aufhängung des Verdichters 11 in Gehäuse 10 als im Falle von vier unabhängigen Trägheitskörpern.

Bei der nur in Draufsicht gezeigten Variante der Fig. 5b sind die vier Trägheitskörper 17 durch Federn 19 miteinander verbunden und somit gegeneinander schwingfähig. Auf diese Weise kann auch das Dissipationsvermögen der Federn 19 zur Absorption von Schwingungsenergie genutzt werden.

Bei der Variante der Fig. 5c sind die Trägheitskörper der vier Federanordnungen zu einem Ring 20 verschmolzen, und die Federelemente 15 und 16 greifen an jeweils unterschiedlichen Punkten des Ringes an. Eine solche Anordnung fördert die Anregung von Biegeschwingungen in dem Ring 20 und ist insbesondere dann nützlich, wenn der Ring selbst aus einem schwingungsdämpfenden Material besteht.

## Patentansprüche

1. Kältegerät mit einem Verdichter (4; 11) und einem Gehäuse (5; 10) zur Aufnahme des Verdichters, bei dem der Verdichter (4; 11) an dem Gehäuse (5; 10) über wenigstens eine gedämpfte Federanordnung (1, 2; 14) gehalten ist, die an jeweils einem Verbindungspunkt (12, 13) mit dem Verdichter (4; 11) bzw. dem Gehäuse (5; 10) verbunden ist, wobei die Federanordnung (1, 2; 14) wenigstens ein einzelnes Federelement (1; 15), das eine erste Resonanzfrequenz aufweist, und wenigstens ein weiteres einzelnes Federelement (2; 16) umfasst, das mit einer zweiten Resonanzfrequenz schwingfähig ist, **dadurch gekennzeichnet, dass** die einzelnen Federelemente zwischen dem Verdichter (4; 11) und dem Gehäuse (5; 10) über eine schwingfähige Masse (17, 18, 20) in Reihe verbunden sind und dass die zwei Resonanzfrequenzen eine Differenzfrequenz im hörbaren Spektralbereich aufweisen.

2. Kältegerät nach Anspruch 1, **dadurch gekennzeichnet, dass** die schwingfähigen Massen (17, 18, 20) verschiedener Federanordnungen (14) untereinander verbunden sind.

3. Kältegerät nach Anspruch 1 oder 2, **dadurch gekennzeichnet, dass** die Einzelfederelemente (1, 2; 15, 16) unterschiedliche Federkonstanten haben.

4. Kältegerät nach einem der vorhergehenden Ansprüche, **dadurch gekennzeichnet, dass** die freie Schwingung des zusätzlichen schwingfähigen Elements durch einen Ausdruck der Form x=e^{-αt}beschreibbar ist, wobei x die Auslenkung, t die Zeit und a ein komplexer Parameter ist, und dass 0,1| Re α| <|mα |mα| <10| Re α| gilt.

5. Kältegerät nach einem der vorherigen Ansprüche, **dadurch gekennzeichnet, dass** die Einzelfederelemente (1, 2; 15,16) Körper aus einem elastisch verformbaren Material sind.

## Claims

1. Refrigerating appliance with a compressor (4; 11) and a housing (5; 10) for reception of the compressor, in which the compressor (4; 11) is mounted at the housing (5; 10) by way of at least one damped spring arrangement (1, 2; 14), which is connected at a respective connecting point (12, 13) with each of the compressor (4; 11) and the housing (5; 10), wherein the spring arrangement (1, 2; 14) comprises at least one individual spring element (1; 15), which has a first resonance frequency, and at least one further individual spring element (2; 16), which is capable of oscillating at a second resonance frequency, **characterised in that** the individual spring elements are connected in series between the compressor (4; 11) and the housing (5; 10) by way of a mass (17, 18, 20) capable of oscillation and that the two resonance frequencies have a difference frequency in the audible spectral range.

2. Refrigerating appliance according to claim 1, **characterised in that** the masses (17, 18, 20) capable of oscillation of different spring arrangements (14) are interconnected.

3. Refrigerating appliance according to claim 1 or 2, **characterised in that** the individual spring elements (1, 2; 15, 16) have different spring constants.

4. Refrigerating appliance according to any one of the preceding claims, **characterised in that** the free oscillation of the additional element capable of oscillation is describable by an expression of the form x = e^{-αt}, wherein x is the deflection, t the time and α a complex parameter, and that 0.1 |Re α| < |Im α| <10| Re α|.

5. Refrigerating appliance according to any one of the preceding claims, **characterised in that** the individual spring elements (1, 2; 15, 16) are bodies of a resiliently deformable material.

## Revendications

1. Appareil frigorifique comprenant un compresseur (4 ; 11) et un carter (5 ; 10) pour le logement du compresseur, dans lequel le compresseur (4 ; 11) est fixé sur le carter (5 ; 10) au moyen d'au moins un agencement à ressort (1, 2 ; 14) amorti, lequel est relié par respectivement un point de liaison (12, 13) au compresseur (4; 11) respectivement au carter (5 ; 10), l'agencement à ressort (1, 2 ; 14) comprenant au moins un élément de ressort (1, 15) individuel, qui présente une première fréquence de résonance, et au moins un autre élément de ressort (2 ; 16) individuel, qui peut être mis en vibration avec une seconde fréquence de résonance, **caractérisé en ce que** les éléments de ressort individuels entre le compresseur (4 ; 11) et le carter (5:10) sont reliés en série par une masse (17, 18, 20) susceptible d'être mise en vibration et **en ce que** les deux fréquences de résonance présentent une fréquence différentielle dans la plage spectrale audible.

2. Appareil frigorifique selon la revendication 1, **caractérisé en ce que** les masses (17, 18, 20) susceptibles d'être mises en vibration de différents agencements à ressort (14) sont reliées entre elles.

3. Appareil frigorifique selon la revendication 1 ou 2, **caractérisé en ce que** les éléments de ressort individuels (1, 2 ; 15, 16) présentent différentes constantes de rappel.

4. Appareil frigorifique selon l'une quelconque des revendications précédentes, **caractérisé en ce que** la vibration libre de l'élément supplémentaire susceptible d'être mise en vibration peut être décrite par une expression de la forme x = e^{-αt}, x étant la déviation, t le temps et a un paramètre complexe, et **en ce que** l'on a 0,1 |Reα| < |Imα < 10 |Reα|.

5. Appareil frigorifique selon l'une quelconque des revendications précédentes, **caractérisé en ce que** les éléments de ressort individuels (1, 2 ; 15, 16) sont des corps à base d'un matériau élastiquement déformable.
